# EUROPEAN PATENT APPLICATION

(11) **EP 4 279 842 A2**
(43) Date of publication of application: **22.11.2023**
(21) Application number: 23202429.9
(22) Date of filing: 31.07.2019
(51) Int. Cl.: F25D 23/12

(54) **REFRIGERATOR**

(30) Priority: 01.08.2018 KR 20180089933
(62) Divisional of application: 19189410.4
(71) Applicant: LG Electronics Inc., Yeongdeungpo-gu Seoul 07336 (KR)
(72) Inventor: You, Jimin, 08592 Seoul (KR); Choi, Sangphil, 08592 Seoul (KR)
(74) Representative: Ter Meer Steinmeister & Partner

(57) **Abstract**

Disclosed is a refrigerator. The present invention provides a refrigerator having a freezer compartment and a refrigerator compartment, the refrigerator including an icemaker provided to the freezer compartment or a freezer compartment door configured to open/close the freezer compartment, a dispenser provided to a refrigerator compartment door configured to open/close the refrigerator compartment, a pump configured to send the water supplied from the water tank to the icemaker, and a water tank provided to the refrigerator compartment door, the water tank having an inlet for putting in water, a first outlet for supplying water to the dispenser, and a second outlet for supplying water to the pump.

## Description

This application claims the benefit of earlier filing date and right of priority to Korean Application No. 10-2018-0089933, filed on August 1, 2018.

### BACKGROUND OF THE INVENTION

### Field of the Invention

The present invention relates to a refrigerator, and more particularly, to a refrigerator having a dispenser and an icemaker.

### Discussion of the Related Art

A refrigerator is equipped with a food storage space capable of blocking externally infiltrating heat with a cabinet and door filled with heat insulator. The refrigerator is equipped with a freezer consisting of an evaporator absorbing heat in the food storage space and a radiator discharging collected heat from the food storage space. Therefore, the refrigerator controls the food storage space to be maintained as a low-temperature area in which microorganisms have difficulties in survival and proliferation, thereby keeping the stored food away from spoiling for a long time.

A refrigerator has a refrigerator compartment for storing food in a temperature area above zero and a freezer compartment for storing food in a temperature area below zero. According to the disposition of a refrigerator compartment and a freezer compartment, refrigerators are classified into a top freezer refrigerator having a top freezer compartment and a bottom refrigerator compartment, a bottom freezer refrigerator having a top refrigerator compartment and a bottom freezer compartment, a side-by-side refrigerator having a left freezer compartment and a right refrigerator compartment, etc.

In order for a user to place or get the food stored in the food storage space conveniently, the refrigerator is equipped with a multitude of racks, drawers and the like provided in the food storage space. And, the refrigerator door is equipped with shelves, baskets and the like to store food, drinking water, etc.

Meanwhile, the refrigerator may be equipped with various convenience features. For example, the refrigerator can be equipped with a dispenser, an icemaker and the like. The dispenser is a device for a user to get water (e.g., drinking water) without opening the refrigerator door. And, the icemaker is a device for making and keeping ice by being located in the freezer compartment in general. In this case, water needs to be supplied to the dispenser and the icemaker.

### SUMMARY OF THE INVENTION

Accordingly, embodiments of the present invention are directed to a refrigerator that substantially obviates one or more problems due to limitations and disadvantages of the related art.

An object of the present invention is to provide a refrigerator capable of supplying water to a dispenser and an icemaker efficiently using a single water tank.

Another object of the present invention is to provide a refrigerator, by which a water supply passage can be simplified while supplying water to a dispenser and an icemaker efficiently using a single water tank.

Further object of the present invention is to provide a refrigerator having a dispenser and an icemaker, by which user's convenience is improved.

Additional advantages, objects, and features of the invention will be set forth in the disclosure herein as well as the accompanying drawings. Such aspects may also be appreciated by those skilled in the art based on the disclosure herein.

The present invention can supply water to a dispenser and an icemaker from a single water tank.

The present invention is applicable to a refrigerator having a refrigerator compartment and a freezer compartment. For instance, the present invention is applicable to a refrigerator having a freezer compartment located at the top and a refrigerator compartment located at the bottom.

The dispenser may be provided to a refrigerator compartment door and the icemaker may be provided to the freezer compartment or a freezer compartment door. The water tank may be provided to the refrigerator compartment door, and a water supply passage may be connected to each of the dispenser and the icemaker from the water tank.

The water tank is disposed over the dispenser so that water in the water tank can be supplied to the dispenser by gravity. A pump for sending water of the water tank to the icemaker is usable. And, the pump may be disposed under the eater tank.

The water tank may have a first outlet for discharging water to the dispenser and a second outlet for discharging water to the icemaker.

Each of the first and second outlets may be projected from a lower part of the water tank toward a front side and configured in a manner of inclining at a prescribed angle. In a lateral view of the water tank, the first outlet and the second outlet may be disposed on the same line.

A passage to an entrance of the pump from the second outlet of the water tank may use an inside of the refrigerator compartment door, i.e., a space between an outer door and an inner door. A connector selectively removable from the second outlet may be provided to the inner door.

And, a passage to the icemaker from an exit of the pump may use the inside of the refrigerator compartment door, i.e., the space between in the outer door and the inner door.

Moreover, a passage between the refrigerator compartment and the freezer compartment may use a hinge shaft of a refrigerator door. For example, a hollow shaft is used as the hinge shaft, whereby the passage between the refrigerator compartment and the freezer compartment can be connected through a hollow portion of the hollow shaft.

To achieve these objects and other advantages and in accordance with the purpose of the invention, as embodied and broadly described herein, a refrigerator having a freezer compartment and a refrigerator compartment according to one embodiment of the present invention may include an icemaker provided to the freezer compartment or a freezer compartment door configured to open/close the freezer compartment, a dispenser provided to a refrigerator compartment door configured to open/close the refrigerator compartment, a pump configured to send the water supplied from the water tank to the icemaker, and a water tank provided to the refrigerator compartment door, the water tank having an inlet for putting in water, a first outlet for supplying water to the dispenser, and a second outlet for supplying water to the pump.

According to an exemplary embodiment of the present invention, the refrigerator may further include a cap configured to selectively open/close the inlet.

According to an exemplary embodiment of the present invention, the first outlet and the second outlet may be provided to a bottom side of the water tank.

According to an exemplary embodiment of the present invention, the first outlet and the second outlet may be provided in a manner of inclining downward at the same angle with the water tank in a front direction. The first outlet and the second outlet may extend downward, i.e. in a vertical direction or a direction of gravity. The first outlet and the second outlet may be inclined at the same angle with respect to a a horizontal plane, preferably towards an outer surface of the refrigerator compartment door or towards the dispenser. The water tank may be provided in the refrigerator compartment door. In this disclosure, the terms "vertical" and "horizontal" may refer to directions when the refrigerator is in an operational position.

According to an exemplary embodiment of the present invention, the first outlet and the second outlet may be located on the same line when viewed in a lateral direction of the water tank. That is, the first outlet and the second outlet may extend in parallel to each other.

According to an exemplary embodiment of the present invention, a valve configured to selectively open/close the first outlet may be provided to the first outlet.

According to an exemplary embodiment of the present invention, a switch configured to selectively open/close the second outlet may be provided to the second outlet.

According to an exemplary embodiment of the present invention, if the water tank is separated from the refrigerator compartment door, the switch may close the second outlet. If the water tank is installed at the refrigerator compartment door, the switch may open the second outlet.

According to an exemplary embodiment of the present invention, a support member may be provided to an inside of the refrigerator compartment door. Further a guide member detachable from the support member may be provided to a lateral side of the water tank.

According to an exemplary embodiment of the present invention, the support member may include a top surface portion having a prescribed inclination, a rear surface portion descending at a prescribed angle from a rear of the top surface portion and a front surface portion descending at a prescribed angle from a front of the top surface portion. The guide member may include a center portion, a rear portion and a front portion corresponding to the top surface portion, the rear surface portion and the front surface portion, respectively.

According to an exemplary embodiment of the present invention, an inclination angle of the support member may be smaller than an inclination angle of the second outlet of the water tank. That is, the second outlet of the water tank may be inclined with respect to a horizontal plane. An angle of inclination of the top surface portion of the support member with respect to a horizontal plane may be smaller than an angle of inclination of the second outlet of the water tank. Here, the angles may be defined as the smaller one of the angles being formed by the support member (or by the second outlet) with the horizontal plane.

According to an exemplary embodiment of the present invention, the refrigerator may further include a pump housing configured to receive the pump therein. A connecting member may be provided between the second outlet and the pump housing.

According to an exemplary embodiment of the present invention, a connector may be provided to the refrigerator compartment door. The second outlet of the water tank may be selectively connected to the connector.

According to an exemplary embodiment of the present invention, the connector may include a small-diameter portion, a large-diameter portion on the small-diameter portion and a tube-expanding portion on the large-diameter portion.

According to an exemplary embodiment of the present invention, the switch may be movable in an axial direction. A protruding portion may be provided to a top side of the small-diameter portion of the connector. The switch may be moved upward by the protruding portion.

According to an exemplary embodiment of the present invention, a gasket ring cover may be provided to an inside of the connector. A gasket ring may be provided to an inside of the gasket ring cover.

According to an exemplary embodiment of the present invention, the gasket ring cover and the connector may be disposed to have the same inclination of the second outlet.

According to an exemplary embodiment of the present invention, an inner door of the refrigerator compartment door may be inserted between a tip of the gasket ring cover and a tip of the connector.

According to an exemplary embodiment of the present invention, the refrigerator may further include a tube connecting the pump and the icemaker. The tube may pass through a hollow portion of a hinge shaft of the refrigerator compartment door.

According to an exemplary embodiment of the present invention, the refrigerator may further include a tube guide configured to receive the tube therein.

The respective features of the above-described embodiments can be configured in a manner of being combined with other embodiments unless contradictory or exclusive to other embodiments.

Accordingly, a refrigerator according to the present invention provides the following effects or advantages.

First of all, according to the present invention, water can be supplied to a dispenser and an icemaker efficiently using a single water tank.

Secondly, according to the present invention, a passage to a dispenser and an icemaker can be simplified despite using a single water tank.

Thirdly, according to the present invention, user's convenience can be improved by supplying water to a dispenser and an icemaker using a single water tank.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
FIG. 1 is a front diagram showing a refrigerator according to an embodiment of the present invention;
FIG. 2 is a perspective diagram showing a water tank, a dispenser and a pump housing shown in FIG. 1;
FIG. 3 is a partially-cut perspective diagram showing that a water tank shown in FIG. 1 is installed at a door;
FIG. 4 is a cross-sectional diagram showing that a water tank shown in FIG. 1 is installed at a refrigerator compartment door; and
FIG. 5 is a perspective diagram showing a passage to a pump and icemaker from a water tank shown in FIG. 1.

### DETAILED DESCRIPTION OF THE INVENTION

Reference will now be made in detail to a refrigerator according to the preferred embodiment of the present invention, examples of which are illustrated in the accompanying drawings. Although description will now be given in detail according to exemplary embodiments disclosed herein with reference to the accompanying drawings, the embodiments and drawings are used to help the understanding of the present invention.

Moreover, to help the understanding of the present invention, s the accompanying drawings may be illustrated in a manner of exaggerating sizes of some components instead of using a real scale.

Thus, the present invention is non-limited to the following embodiment, and it is intended that the present invention covers the modifications and variations of this invention provided they come within the scope of the appended claims and their equivalents.

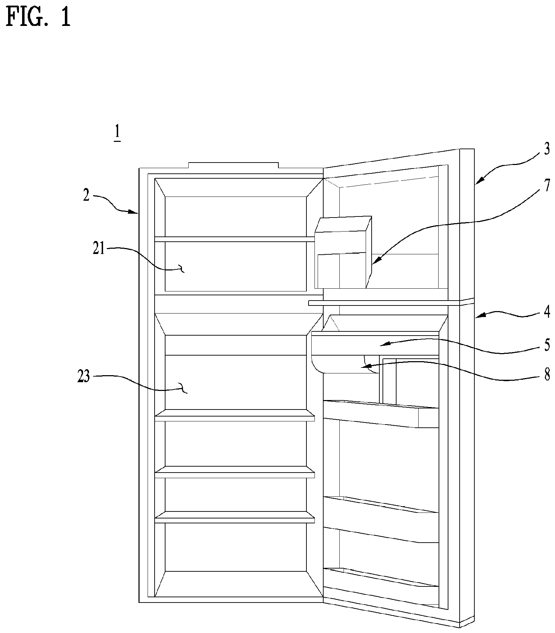

First of all, an overall configuration of a refrigerator according to a preferred embodiment of the present invention is described with reference to FIG. 1. In the following description, a top-freezer refrigerator having a freezer compartment located provided to a top and a refrigerator compartment provided to a bottom is taken as an example.

For clarity of the following description, a refrigerator door direction shall be represented as a front and a freezer/refrigerator compartment direction shall be represented as a rear. Moreover, left and right directions are described with reference to viewing a refrigerator in a door direction.

A freezer compartment 21 is provided to a top side of a cabinet 2 configuring an exterior of a refrigerator 1, and a refrigerator compartment 23 is provided to a bottom side of the cabinet 2. A freezer compartment door 3 configured to open/close the freezer compartment 21 is rotatable coupled to the freezer compartment 21. And, a refrigerator compartment door 4 configured to open/close the refrigerator compartment 23 is rotatably coupled to the refrigerator compartment 23.

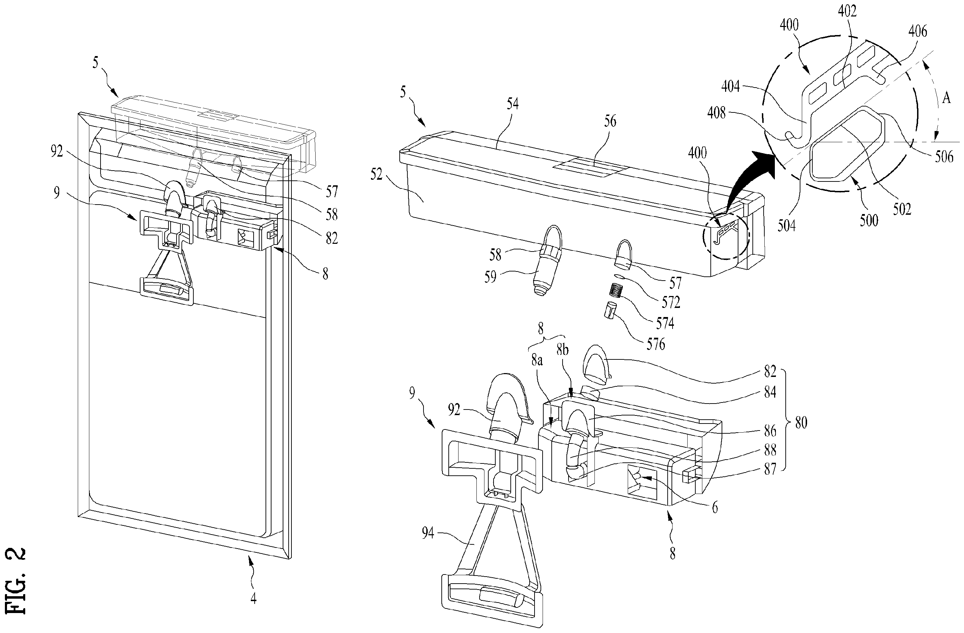

Meanwhile, an icemaker 7 is installed at the freezer compartment door 3 and a dispenser 9 (see FIG. 2) is installed at the refrigerator compartment door 4. Although the icemaker 7 can be installed within the freezer compartment 21 or at the freezer compartment door 3, the following description is made by taking an example of installing the icemaker 7 at the freezer compartment door 3.

A water tank 5 configured to receive water therein is removably provided to the refrigerator compartment door 4. A pump housing 8 is provided under the water tank 5, and a pump is installed within the pump housing 8.

The water of the water tank 5 can be provided to the dispenser and/or the icemaker 7 selectively or simultaneously. Namely, a passage for supplying the water of the water tank 5 to the dispenser is provided between the water tank 5 and the dispenser and a passage for supplying the water of the water tank 5 to the icemaker 7 is provided between the water tank 5 and the icemaker 7. [Specific passage structures shall be described later.]

In some implementations, the water tank 5 is preferably located over the dispenser. Therefore, the water supply from the water tank 5 to the dispenser can be achieved by gravity, i.e., free fall without using a separate pump. On the other hand, since the icemaker 7 is provided to the freezer compartment door 3, it is preferable that the water of the water tank 5 is sent to the icemaker 7 using a pump. An automatic icemaker is preferably used as the icemaker 7, by which the present invention is non-limited.

The water tank 5, the pump housing 8 and the dispenser 9 are described with reference to FIG. 2 as follows.

First of all, the water of the water tank 5 should be supplied to each of the dispenser 9 and a pump 6 within the pump housing 8.

Hence, a first outlet 58 and a second outlet 57 are provided to the water tank 5. And, the water is supplied to the dispenser 9 and the pump 6 through the first outlet 58 and the second outlet 57, respectively.

While the water tank 5 is separate from the refrigerator compartment door 4, since the first outlet 58 and the second outlet 57 are blocked or closed, the water of the water tank 5 is not discharged externally.

If a user couples the water tank 5 to the refrigerator compartment door 4, the first outlet 58 of the water tank 5 is connected to the passage to the dispenser 9 and the second outlet 57 is connected to the passage to the pump 6. [Specific passage opening/closing structures of the first and second outlets shall be described later.]

The respective components are described in detail as follows.

First of all, the water tank 5 is described.

Water is received in the water tank 5. The water of the water tank 5 can be supplied to the dispenser 9 and the icemaker 7.

To this end, an inlet (not shown) for putting external water into the water tank 5 may be provided to the water tank 5. A cap 56 for selectively opening/closing the inlet can be provided. And, the first outlet 58 for supplying water to the dispenser 9 may be provided to the water tank 5. And, the second outlet 57 for supplying water to the icemaker 7 may be provided to the water tank 5.

In some implementations, although the water tank 5 may be formed inte3grally, it may be configured in a manner of including a container 52 and a cover 54. For clarity of the following description, the water tank 5 is described in a manner of being divided into the container 52 and the cover 52.

For example, the water tank 5 may include the container 52 having a prescribed space configured to receive water therein. The cover 54 may be removably coupled to a top side of the container 52. In order for a user to put water into the container 52, a cap 56 may be removably provided to the cover 54.

A shape of the container 52 is non-limited but may preferably have an approximately hexahedral shape of which inside is empty. And, it is preferable that a width (i.e., right-to-left length) of the container 52 may be substantially equal to or slightly smaller than a width of the refrigerator compartment door. A depth (i.e., front-to-rear length) and thickness (i.e., top-to-bottom length) of the container 52 can be selected appropriately.

Meanwhile, the first outlet 58 and the second outlet 57 are provided to the container 52. It is preferable that each of the first and second outlets 58 and 57 is projected downward from a bottom of a front portion of the container 52. Water is supplied to the dispenser 9 through the first outlet 58. And, Water is supplied to the pump 6 within the pump housing 8 through the second outlet 57.

Preferably, the first outlet 58 is provided to the center of the container 52 approximately. Namely, as water is supplied to the dispenser 9 through the first outlet 58, the dispenser 9 is generally located at the center of the refrigerator compartment door 4. Hence, if the first outlet 58 is disposed at the center of the container 52, it is able to decrease a length of a passage.

Preferably, the second outlet 57 may be disposed in a manner of inclining to one side from the center of the container 52, and more preferably, a portion at which the hinge shaft of the refrigerator compartment door 4 is installed. Namely, the pump 6 plays a role in sending water of the water tank 5 to the icemaker 7 provided to the freezer compartment door 3. Yet, it is preferable to decrease the length of the passage connected to the icemaker 7 from the pump 6. To this end, the pump 6 may be preferably disposed to one side of the refrigerator compartment door 4, and more preferably, to a place adjacent to a portion at which the hinge shaft is installed. Therefore, it is preferable that the second outlet 57 connected to the pump housing 8 having the pump 6 received therein is also disposed in a manner of inclining in a direction of the hinge shaft.

Meanwhile, the first outlet 58 is preferably provided in a manner of inclining downward in a front direction (e.g., an outdoor direction) of the refrigerator compartment door 4. This is because the dispenser 9 connected to the first outlet 58 is provided in front of the refrigerator compartment door 4. Preferably, the second outlet 57 is provided in a manner of having the substantially same inclination of the first outlet 58. Namely, if the first outlet 58 and the second outlet 57 differ from each other in inclination, it is not easy to couple the water tank 5 to the refrigerator compartment door 4.

The inclinations of the first and second outlets 58 and 57 are described as follows.

First of all, although each of the first and second outlets 58 and 57 may have an inclination between horizontality (0°) and verticality (90°), it may have the inclination between 45° ~ 90° preferably. This is because, if the first and second outlets 58 and 57 are formed horizontally, it is possible to install the water tank 5 in a horizontal direction without interfering with other structures such as a rack, a basket and the like within the refrigerator compartment door 4. Yet, in this case, as the first and second outlets 58 and 57 are projected horizontally, it is necessary to increase the thickness of the refrigerator compartment door 4.

Moreover, if the first and second outlets 58 and 57 are formed in a direction closer to a vertical direction, when the water tank 5 is installed at the refrigerator compartment door 4, interference with other structures of the refrigerator compartment door 4 is generated. Although the height of the water tank 5 can be reduced to avoid such interference, the capacity or volume of the water tank 5 is disadvantageously reduced.

Yet, if each of the first and second outlets 58 and 57 has the inclination between 45° and 90°, such requirements can be met as far as possible. Namely, it is able to install the water tank 5 at the refrigerator compartment door 4 by minimizing the interference with other structures within the refrigerator compartment door 4 without reducing the capacity of the water tank 5 as well as increasing the thickness of the refrigerator compartment door 4.

Meanwhile, the first outlet 58 and the second outlet 57 are preferably colocated on the front side of the water tank 5. Namely, when the first outlet 58 and the second outlet 57 are viewed in a lateral direction of the water tank 5, they are preferably located on the same line. This is because, if the first outlet 58 and the second outlet 57 are located on the front side and the rear side of the water tank 5, respectively, it is not easy to couple the water tank 5 to the refrigerator compartment door 4.

Namely, when the water tank 5 is coupled to the refrigerator compartment door 4, the water tank 5 interferes with racks of the refrigerator compartment door, which may be present above or below of the water tank, whereby the coupling is not facilitated. Moreover, if the first outlet 58 and the second outlet 57 are not located on the front side of the water tank 5, the passage from the water tank 5 to the refrigerator compartment door 4 increases.

The coupling between the first outlet 58 and the dispenser 9 is described as follows.

First of all, a valve 59 is coupled to the first outlet 58 of the water tank 5, and the valve 59 is coupled to the dispenser 9 through a dispenser connector 92. If a user pushes a lever 94, the valve 59 becomes open so that the water of the water tank 5 can be externally discharged through the first outlet 58 and the valve 59. As the structure of the dispenser 9 is popularly known and used, its details shall be omitted. For convenience and facilitation of assembly, an inclination angle of the first outlet 58 of the water tank 5 may be equal to that of the dispenser connector 92.

Structures of the second outlet 57 of the water tank 5 and the pump housing 8 are described as follows.

First of all, the pump housing 8 is described.

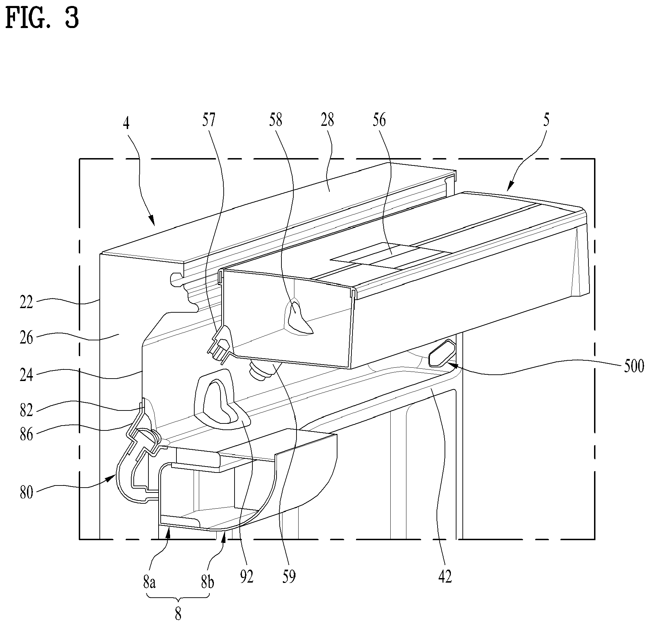

The pump housing 8 is coupled to an inside of the refrigerator compartment door 4. The pump 6 is provided within the pump housing 8. The pump housing 8 may include a front housing 8a and a rear housing 8b provided in rear of the front housing 8a. The front housing 8a may preferably have an approximately hexahedral shape. Preferably, the rear housing 8b has a top-bottom height and a right-left width slightly greater than those of the front housing 8b. The rear housing 8b may play a role in supporting a portion of the water tank 5 installed over the rear housing 8b [See FIG. 3].

Meanwhile, it is preferable that a passage connecting an entrance of the pump 6 and the second outlet 57 is protected. To this end, a connecting member 80 may be provided between the pump housing 8 and the refrigerator compartment door 4.

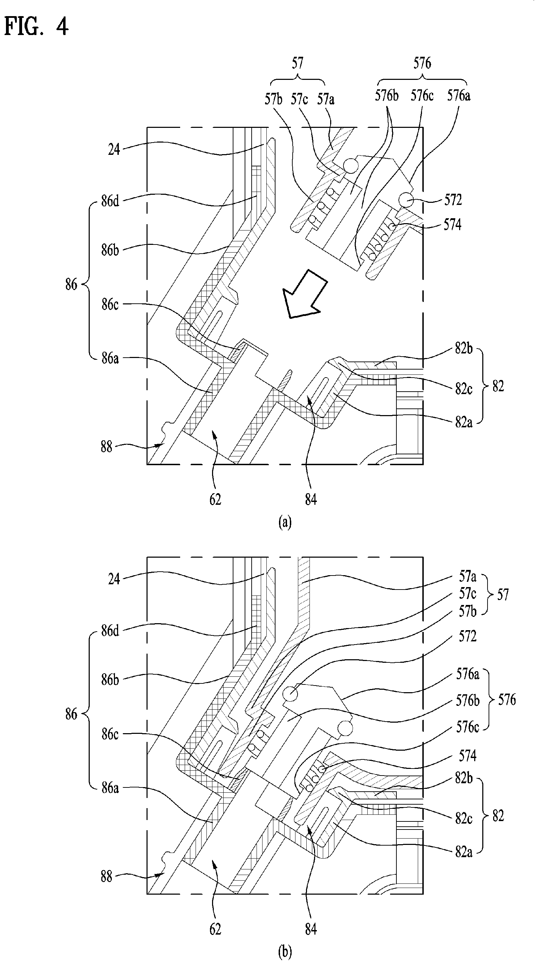

A passage, e.g., a tube 62 may be received in the connecting member 80. The tube 62 can connect the entrance of the pump 6 and a connector 86 provided to the inner door of the refrigerator compartment door 4 [See FIG. 4].

The connecting member 80 of the pump housing 8 is described as follows.

First of all, a tube joint 87 is coupled to an outside of the front housing 8a, a tube guide 88 is coupled to the tube joint 87, and the connector 86 is coupled to the tube guide 88.

A gasket ring cover 82 is coupled to an inside of the connector 86, and a gasket ring 84 is received in an inner surface of the gasket ring cover 82.

Meanwhile, an annular ring 572, a spring 574 and a shaft 576 are provided within the second outlet 57. [Specific removable structures of the second outlet 57 of the water tank 5 and the connecting member 80 of the pump housing 8 shall be described later.]

With reference to FIG. 2 and FIG. 3, a structure that the water tank 5 is coupled to the refrigerator compartment door 4 is described as follows.

First of all, the refrigerator compartment door 4 is described. Generally, the refrigerator compartment door 4 includes an outer door 22 and an inner door (e.g., a door liner) 24 coupled to the outer door 22.

A top cap deco 28 is coupled to the top sides of the outer and inner doors 22 and 24, and a bottom cap deco (not shown) is coupled to the bottom sides thereof. A space formed by the outer door 22, the inner door 24, the top cap deco 26 and the bottom cap deco is filled up with an insulator 26.

Meanwhile, a seat portion 42 projected in an approximately horizontal direction is provided to the inner door 24. The water tank 5 is put on a top surface of the seat portion 42. The pump housing 8 is coupled to a bottom side of the seat portion 42. The rear housing 8b of the pump housing 8 is projected from the seat portion 42 in a rear direction, thereby playing a role in supporting the water tank 5.

A dispenser connector 92 is coupled to an approximate center of the seat portion 42 of the inner door 24. And, the valve 59 coupled to the first outlet 58 of the water tank 5 is inserted in the dispenser connector 92.

A gasket ring cover 82 may be provided next to the dispenser connector 92. The second outlet 57 of the water tank 5 is inserted in the gasket ring cover 82. And the connecting member 80 is connected between the gasket ring cover 82 and the front housing 8a.

Meanwhile, in order to facilitate the water tank 4 to be seated on the refrigerator compartment door 4, it is preferable that an inclination angle of the first outlet 58 in the front direction is equal to that of the second outlet 57 in the front direction. And, it is preferable that an inclination angle of the dispenser connector 92 coupled to the first outlet 58 is equal to that of the gasket ring cover 82 coupled to the second outlet 57.

Moreover, in order to facilitate the water tank 5 to be attached to or detached from the refrigerator compartment door 4, an additional structure is provided preferably. Such a structure is described as follows.

First of all, a pair of support members 500 are preferably provided to an inside of the refrigerator compartment door 4, and a guide member 400 attached to or detached from the support member 500 is preferably provided to each of both lateral sides of the water tank 5.

The support member 50 is preferably provided to an inside of each of both ends of the inner door 24 with a prescribed thickness. A door dike for seating a rack, a basket or the like is provided to each of both sides of the inner door 24, and the support member 500 is more preferably provided to the door dike.

The support member 500 preferably includes a top surface portion 502 formed to have a prescribed inclination, a rear surface portion 506 descending at a prescribed angle from a rear of the top surface portion 502, and a front surface portion 504 descending at a prescribed angle from a front of the top surface portion 502.

And, an inclination angle A of the top surface portion 502 is preferably smaller than an inclination angle of the second outlet 57 of the water tank 5. For example, the inclination angle A of the top surface portion 502 preferably has an about 35° with a horizontal plane. And, it is preferable that the front surface portion 504 is approximately vertical.

Meanwhile, the guide member 400 provided to the water tank 5 preferably has a shape corresponding to that of the support member 500.

The guide member preferably includes a center portion 402, a rear portion 406 and a front portion 404. Moreover, a projected portion 408 further extending in front direction is preferably provided in front of the front portion 404 of the guide member 400.

The inclination angles of the center portion 402, the rear portion 406 and the front portion 406 of the guide member 400 preferably correspond to the top surface portion 502, the rear surface portion 506 and the front surface portion 506 of the support member 500, respectively. Hence, if the water tank 5 is installed at the refrigerator compartment door 4, the center portion 402, the rear portion 406 and the front portion 406 of the guide member 400 are supported by the top surface portion 502, the rear surface portion 506 and the front surface portion 506 of the support member 500, respectively.

Meanwhile, in a general use state of the refrigerator, the water tank 5 is coupled to the refrigerator compartment door 4. In this state, if the water tank 5 is empty, a user opens the cap 56 of the water tank 56 and then puts water into the water tank 5. In case that a user cleans the water tank 5, the water tank 5 is separated from the refrigerator compartment door 4.

In the state that the water tank 5 is separated from the refrigerator compartment door 4, the first and second outlets 58 and 57 of the water tank 5 should be blocked so that the water of the water tank 5 is not discharged externally. In the state that the water tank 5 is coupled to the refrigerator compartment door 4, the first and second outlets 58 and 57 of the water tank 5 should be open so that water can be supplied to the dispenser 9 and the pump 6.

Yet, the valve 59 is installed at the first outlet 58 of the water tank 5. The valve 59 is normally in a closed state. If a user pushes a lever 94 of the dispenser 9, the valve 59 is open. Namely, as the valve 59 is coupled to the first outlet 58, a separate passage open/close structure is not necessary. The valve 59 is generally used for the dispenser 9 and its details shall be omitted.

On the other hand, in the state that the water tank 5 is separated from the refrigerator compartment door 4, the second outlet 57 of the water tank 5 should have a closed passage. In the state that the water tank 5 is coupled to the refrigerator compartment door 4, the second outlet 57 of the water tank 5 should have an open passage. In the state that the water tank 5 is coupled to the refrigerator compartment door 4, the passage to the entrance of the pump 6 from the water tank 5 is in an open state. And, by the operation of the pump, the water on the entrance side of the pump is supplied to the icemaker 7.

With reference to FIG. 2 and FIG. 4, the open/closed structure of the passage of the second outlet 57 of the water tank 5 is described as follows.

First of all, the structure of the second outlet 57 of the water tank 5 is described in detail.

A switch capable of selectively opening/closing the second outlet 57 can be provided to the second outlet 57. In the state that the water tank 5 is separated from the refrigerator compartment door 4, the switch can close the second outlet 57. In the state that the water tank is coupled to the refrigerator compartment door 4, the switch can open the second outlet 57.

One embodiment of the switch is described as follows.

First of all, the second outlet 57 of the switch is described. A small-diameter portion 57b having a small diameter is provided to a tip of the second outlet 57 of the water tank 5. A protruding portion 57c protruding inward is provided to a portion from which the small-diameter portion 57b begins. A spring 574 is installed within the small-diameter portion 57b, and the protruding portion 57c plays a role in supporting a top potion of the spring 574.

A shaft 576 is installed in the small-diameter portion 57b. The shaft 576 includes a head portion 576a having a big diameter and a body portion 576b extending downward from the head portion 576a. And, an annular ring 572 is put on the head portion 576a, whereby water leakage can be prevented.

The body portion 576b is configured in a manner that 4 thin panel-type members alternate one another in a radial direction at the center of the shaft 576 and has a cross-shaped cross-section. Space among the 4 panel-type members becomes a passage through which water passes. A catch portion 576c extending in a radial direction is provided to a bottom end of the body portion 576b, and a bottom end of the spring 574 is supported by the catch portion 576c.

Next, the structure of the coupling part of the pump housing 8 is described.

The connector 86 may be provided to the inner door 24 of the refrigerator compartment door 4. The second outlet 57 can be selectively connected to the connector 86. When the second outlet 57 is coupled to the connector 86, water leakage can be prevented preferably. Hence, the gasket ring 84 can be provided to an inside of the connector 86. Moreover, the gasket ring 84 can be supported by the gasket ring cover 82.

One end of the tube guide 88 can be connected to the connector 86, and the other end of the tub guide 88 can be connected to the tube joint 87 coupled to the pump housing 8. And, a passage (e.g., a tube) connected to the entrance of the pump 6 may be connected to the connector 86.

This is described in detail as follows.

First of all, the tube joint 87 is coupled to an outside of the pump housing 8, and the tube guide 88 is coupled to the other side of the tube joint 87. And, the connector 86 is coupled to the other end of the tube guide 88.

The connector 86 includes a small-diameter portion 86a inserted and coupled to an inside of the tube guide 88, and a projected portion 86c projected upward is provided to a top surface of the small-diameter portion 86a. A large-diameter portion 86b having a diameter greater than that of the small-diameter portion 86a is formed on the small-diameter portion 86a. And, a tube-expanding portion 86b extending in a radial direction by inclining upward is formed on the large-diameter portion 86b.

Meanwhile, the gasket ring cover 82 is coupled to the inner surfaces of the large-diameter portion 86b and the tube-expanding portion 86d of the connector 86. Hence, the gasket ring cover 82 approximately has the shape corresponding to the large-diameter portion 86b and the tube-expanding portion 86d of the connector 86.

The gasket ring cover 82 includes a portion 82a corresponding to the large-diameter portion 86b of the connector 86 and a portion 82b corresponding to the tube-expanding portion 86b. And, the gasket ring 84 is received in an inner bottom of the gasket ring cover 82. And, a protruding portion 82c protruding inward is formed at a prescribed position of the gasket ring cover 82 so as to prevent the gasket ring 84 from being pulled out.

Meanwhile, the tip 82b of the gasket ring cover 82 is preferably coupled to a front side of the inner door 24 and the tip 86d of the connector 86 of the connecting member 80 is preferably coupled to a rear side of the inner door 24.

The first outlet is provided in a manner of inclining in a front direction. Accordingly, the gasket ring cover 82 and the connector 86 are preferably installed to have the same inclination angle.

The attaching/detaching process for the second outlet 57 of the water tank 5 and the connecting member 80 of the pump housing 8 is described as follows.

First of all, with reference to FIG. 4 (a), a state that the water tank 5 is separated from the refrigerator compartment door 4 is described.

In this state, the spring 574 installed within the second outlet 57 pulls the shaft 576 downward. Hence, the annular ring 572 provided to the head portion 576a of the shaft 576 closely comes in contact with the protruding portion 57c of the second outlet 57, whereby water is not discharged out of the second outlet 57.

Next, with reference to FIG. 4 (b), a state that the water tank 5 is coupled to the refrigerator compartment door 4 is described.

If the water tank 5 is coupled to the refrigerator compartment door 4, the second outlet 57 of the water tank 5 is inserted in the gasket ring cover 82.

Once the insertion is complete, the projected portion 86c of the connector 86 pushes the shaft 576 upward. Once the shaft 576 is moved upward, the head portion 576a of the shaft 576 is spaced apart from the protruding portion 57c of the second outlet 57.

Therefore, there is a gap between the head portion 576a of the shaft 576 and the protruding portion 57c, whereby water of the water tank 5 is discharged in the direction of the tube 62 through the gap. In doing so, as the small-diameter portion 57b of the second outlet 57 of the water tank 5 is already inserted in the gasket ring 84, the water leakage can be prevented by the gasket ring 84.

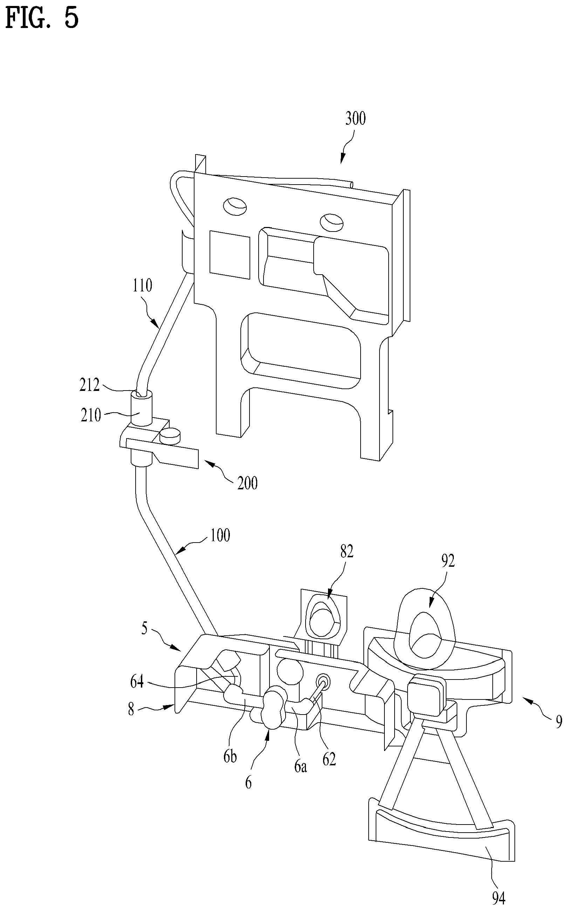

With reference to FIG. 3 and FIG. 5, the passages from the water tank 5 to the dispenser 9 and the icemaker 7 are described as follows.

First of all, the passage from the water tank 5 to the dispenser 9 is described.

The water tank 5 is located above the dispenser 9. The valve 59 connected to the first outlet 58 of the water tank 5 is coupled to a dispenser connector 92. The passage between the water tank 5 and the dispenser 9 is relatively short.

Moreover, as the water tank 5 is located above the dispenser 9, a separate pump is unnecessary. If a user pushes the lever 94, the valve 59 is open and the water of the water tank 5 is discharged to the dispenser 9 by gravity.

Next, the passage from the water tank 5 to the icemaker 7 is described with reference to FIG. 6.

The water tank 5 is provided to the refrigerator compartment door 4. Yet, since the icemaker 7 is provided to the freezer compartment door 3 located above the water tank 5, the pump 6 is required in order to send the water of the water tank 5 to the icemaker 7. Preferably, the supply of water to the icemaker 7 is performed selectively. Namely, water is preferably supplied to the icemaker 7 when an ice tray is empty. Hence, although the icemaker 7 is located below the water tank 5, the pump 6 is used preferably.

The passage from the water tank 5 to the icemaker 7 includes a passage from the water tank 5 to the entrance 6a of the pump 6 and a passage from the exit 6b of the pump 6 to the icemaker 7. A substantial passage from the water tank 5 to the entrance 6a of the pump 6 is the tube 62 starting from the second outlet 57 of the water tank 5 up to the entrance 6a of the pump 6 via the connector 36.

Next, the passage connecting the exit 6b of the pump 6 to the icemaker 7 is described.

The pump 6 is installed at the refrigerator compartment door 4, and the icemaker 7 is installed at the freezer compartment door 3. Hence, the passage from the pump 6 to the icemaker 7 should connect the refrigerator compartment to the freezer compartment.

The connection of the passage from the refrigerator compartment to the freezer compartment preferably uses a hinge shaft 210 of a hinge member 200. For example, the passage from the refrigerator compartment to the freezer compartment is connected in a manner of using a hollow shaft as the hinge shaft 210 and also using a hollow portion 212 of the hinge shaft 210.

This is described in detail as follows.

First of all, the passage from the exit 6b of the pump 6 to the icemaker 7 preferably uses the tube 64 having flexibility. To protect the tube, the tube 64 is preferably received in a tube guide 100. The tube guide 100 includes a hollow pipe capable of receiving the tube therein and preferably uses a material having relative durability.

The tube guide 100 is connected between the pump housing 8 and the hinge shat 210. And. Another tube guide 110 is preferably connected between the hinge shaft 210 and the icemaker 7. The tube guide 100 may directly pass through the hollow portion 212 of the hinge shaft 210. Or, since the hinge shaft 210 is generally formed of metallic material, the tube 64 can directly pass through the hollow portion 212 of the hinge shaft 210 without using the tube guide 100 for the hollow portion 212 of the hinge shaft 210.

Meanwhile, the tube guide 100 from the pump housing 8 to the hinge shaft 210 is preferably buried in the insulator of the refrigerator compartment door. Moreover, the tube guide 110 from the hinge shaft 210 to the icemaker 7 is preferably buried in the insulator of the freezer compartment door.

With reference to FIG. 2 and FIG. 3, an operation of the water tank 5 of the refrigerator according to the present embodiment is described as follows.

First of all, the water tank 5 is removable from the refrigerator compartment door 4. For example, when the water tank 5 is cleaned, a user separates the water tank 5 from the refrigerator compartment door 4. While the water tank 5 is separated, water is not discharged through the first and second outlets 58 and 57 of the water tank 5.

This is because the first outlet 58 is in a state that the passage is blocked by the valve 59 coupled to the first outlet 58. And, the second outlet 57 has the passage blocked by the annular ring 572, the spring 574 and the shaft 576 installed within the second outlet 57.

Once the user finishes the cleaning of the water tank 5, the user installs the water tank 5 at the refrigerator compartment door 4 again.

In doing so, the user can easily seat the water tank 5 on the refrigerator compartment door 4 without interference with other components such as a rack, a basket and the like. This is because the first and second outlets 58 and 57 of the water tank 5 are projected downward at the same inclination angle in a front direction. Moreover, when the first outlet 58 and the second outlet 57 are viewed in a lateral direction of the water tank 5, they are located on the same line. Hence, the water tank 5 can be seated more conveniently and easily.

Once the water tank 5 is seated on the refrigerator compartment door 4, the water of the water tank 5 can be supplied to the dispenser 9 and/or the icemaker 7. As the passage of the vale 59 coupled to the first outlet 58 is blocked even in the state that the water tank 5 is seated on the refrigerator compartment door 4, water is not discharged through the first outlet 58. Yet, if a user pushes the lever 94 of the dispenser 9, an open signal is sent to the valve 59 so as to open the valve 59. As the valve 59 is open, water is discharged to the dispenser 9.

Meanwhile, while the water tank 5 is seated on the refrigerator compartment door 4, water of the water tank 5 can be supplied to the entrance of the pump 6 through the second outlet 57. Yet, if the pump 6 does not operate, the water reaches the pump entrance side only. In this state, if a drive signal of the pump is sent to the pump 6 from the icemaker 7, the pump 6 operates to supply water to the icemaker 7.

Meanwhile, if the water of the water tank 5 is used all in the state that while the water tank 5 is seated on the refrigerator compartment door 4, a user can open the cap 56 of the water tank 5 and put water into the water tank 5 through the cap 56.

As described above, according to the present invention, water can be advantageously supplied to the dispenser 9 and the icemaker 7 using the single water tank 5, whereby convenience in suing the refrigerator is enhanced.

And, owing to the structures of the first and second outlets 58 and 57 of the water tank 5, a user can conveniently install/separate the water tank at/from the refrigerator compartment door 4. Moreover, the passage from the water tank 5 to the dispenser 9 and the icemaker 7 can be minimized advantageously.

The matter of the above-described embodiment is identically applicable to other undescribed parts. Moreover, the technical matter described in one embodiment is identically applicable to another embodiment if it is not contrary mutually, unless otherwise specifically stated.

The top-freezer refrigerator is exemplarily described in the above embodiment, by which the present invention is non-limited. For example, the principle of the present invention is applicable to a bottom-freezer refrigerator. In this case, a water tank and a dispenser are preferably installed at a refrigerator compartment door and an icemaker is preferably installed in a freezer compartment. Although the water tank is located above the icemaker installed in the freezer compartment, it is preferable that water is selectively supplied to the icemaker. Hence, a pump is used preferably. Particularly, an auto-icemaker preferably uses a pump.

Moreover, the principle of the present invention is applicable to a side-by-side refrigerator. In this case, a water tank and a dispenser are preferably installed at a refrigerator compartment door and an icemaker is preferably installed in a freezer compartment. The icemaker installed in the freezer compartment may be installed higher or lower than the water tank. Since it is preferable that water is selectively supplied to the icemaker irrespective of the water tank installation height, a pump is used preferably as well.

It will be appreciated by those skilled in the art that various modifications and variations can be made in the present invention without departing from the spirit or scope of the inventions. As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

It follows a list of examples:
1. A refrigerator having a freezer compartment (21) and a refrigerator compartment (23), the refrigerator comprising:
   an icemaker (7) provided in the freezer compartment or at a freezer compartment door (3) configured to open/close the freezer compartment (21);
   a dispenser (9) provided at a refrigerator compartment door (4) configured to open/close the refrigerator compartment (23);
   a water tank (5) provided at the refrigerator compartment door (4); and
   a pump (6) configured to pump water from the water tank (5) to the icemaker (7);
   wherein the water tank (5) has an inlet for putting in water, a first outlet (58) for supplying water to the dispenser (9), and a second outlet (57) for supplying water to the pump (6).
2. The refrigerator of example 1, wherein the first outlet (58) and the second outlet (57) extend downward and/or are inclined at the same angle to a horizontal plane.
3. The refrigerator of example 1 or 2, wherein the first outlet and the second outlet extend in parallel to each other.
4. The refrigerator according to any one of the preceding examples, further comprising a switch configured to selectively open and close the second outlet (57).
5. The refrigerator of example 4, wherein if the water tank (5) is separated from the refrigerator compartment door (4), the switch is configured to close the second outlet (57) and/or wherein if the water tank (5) is installed at the refrigerator compartment door (4), the switch is configured to open the second outlet (57).
6. The refrigerator according to any one of the preceding examples, further comprising a pump housing (8) accommodating the pump (6) therein and a connecting member (80) for detachably connecting the second outlet (57) and the pump housing (8).
7. The refrigerator of example 6, wherein the connecting member (80) includes a connector (86), into which the second outlet (57) of the water tank (5) is insertable.
8. The refrigerator of example 7, wherein the connector (86) comprises a small-diameter portion (86a), a large-diameter portion (86b) and an expanding portion (86d), wherein the large-diameter portion (86b) is arranged between the small-diameter portion (86a) and the expanding portion (86d), and wherein the large-diameter portion (86b) has a larger diameter than the small-diameter portion (86a) and the expanding portion (86d) has a diameter expanding from the diameter of the large-diameter portion (86b).
9. The refrigerator of example 8, wherein the switch is movable in an insertion direction of the second outlet (57), wherein the connector (80) includes a protruding portion (86c) provided at the small-diameter portion (86a) and protruding in the insertion direction of the second outlet (57) in order to operate the switch of the second outlet.
10. The refrigerator of any one of examples 7 to 9, wherein a gasket ring cover (82) including a gasket ring (84) is provided in the connector (86).
11. The refrigerator of example 10, wherein an inner door (24) of the refrigerator compartment door (4) is arranged between the gasket ring cover (82) and the connector (86).
12. The refrigerator of example 11, further comprising a tube (64) connecting the pump (6) and the icemaker (7), wherein the tube (64) passes through a hollow portion of a hinge shaft of the refrigerator compartment door (4).
13. The refrigerator according to any one of the preceding examples, wherein the refrigerator compartment door (4) has a support member (500) for detachably supporting the water tank (5)and wherein the water tank (5) has a guide member (400) to be supported by the support member.
14. The refrigerator of example 13, wherein the support member (500) comprises a top surface portion (502) being inclined at a prescribed angle with respect to a horizontal plane, a rear surface portion (506) descending at a prescribed angle from one end of the top surface portion (502), and a front surface portion (504) descending at a prescribed angle from the other end of the top surface portion (502), and wherein the guide member (400) comprises a center portion (402), a rear portion (406) and a front portion (404) corresponding to the top surface portion (502), the rear surface portion (506) and the front surface portion (504) of the support member (500), respectively.
15. The refrigerator of example 14, wherein the second outlet (57) of the water tank (5) is inclined with respect to a horizontal plane and an angle of inclination of the top surface portion (502) of the support member (500) is smaller than an angle of inclination of the second outlet (57) of the water tank (5).

## Claims

1. A refrigerator having a freezer compartment (21) and a refrigerator compartment (23), the refrigerator comprising:
an icemaker (7) provided in the freezer compartment or at a freezer compartment door (3) configured to open/close the freezer compartment (21);
a dispenser (9) provided at a refrigerator compartment door (4) configured to open/close the refrigerator compartment (23);
a water tank (5) provided at the refrigerator compartment door (4); and
a pump (6) configured to pump water from the water tank (5) to the icemaker (7);
wherein the water tank (5) has an inlet for putting in water, a first outlet (58) for supplying water to the dispenser (9), and a second outlet (57) for supplying water to the pump (6).

2. The refrigerator of claim 1, wherein wherein the water in the water tank(5) is supplied to the dispenser(9) via the first outlet(58) by gravity and the water in the water tank(5) is supplied to the icemaker(7) via the second outlet(57) by the pump(6)

3. The refrigerator of claims 1 or 2, wherein the first outlet(58) and the second outlet(57) are arranged at a bottom side of the water tank(5), and
wherein the first outlet(58) and the second outlet(57) are insertable via the refrigerator compartment door (4) when the water tank(5) is installed at the refrigerator compartment door (4).

4. The refrigerator of claim 3, wherein the first outlet (58) and the second outlet (57) extend downward and/or are inclined at the same angle to a horizontal plane.

5. The refrigerator of any one of the preceding claims, wherein the first outlet and the second outlet extend in parallel to each other.

6. The refrigerator according to any one of the preceding claims, further comprising a switch configured to selectively open and close the second outlet (57), and
wherein if the water tank (5) is separated from the refrigerator compartment door (4), the switch is configured to close the second outlet (57) and/or wherein if the water tank (5) is installed at the refrigerator compartment door (4), the switch is configured to open the second outlet (57).

7. The refrigerator according to any one of the preceding claims, further comprising a pump housing (8) accommodating the pump (6) therein and a connecting member (80) for detachably connecting the second outlet (57) and the pump housing (8).

8. The refrigerator of claim 7, wherein the connecting member (80) includes a connector (86), into which the second outlet (57) of the water tank (5) is insertable.

9. The refrigerator of claim 8, wherein the connector (86) comprises a small-diameter portion (86a), a large-diameter portion (86b) and an expanding portion (86d), wherein the large-diameter portion (86b) is arranged between the small-diameter portion (86a) and the expanding portion (86d), and wherein the large-diameter portion (86b) has a larger diameter than the small-diameter portion (86a) and the expanding portion (86d) has a diameter expanding from the diameter of the large-diameter portion (86b).

10. The refrigerator of claim 9, wherein the switch is movable in an insertion direction of the second outlet (57), wherein the connector (80) includes a protruding portion (86c) provided at the small-diameter portion (86a) and protruding in the insertion direction of the second outlet (57) in order to operate the switch of the second outlet.

11. The refrigerator of any one of claims 8 to 10, wherein a gasket ring cover (82) including a gasket ring (84) is provided in the connector (86).

12. The refrigerator of claim 11, wherein an inner door (24) of the refrigerator compartment door (4) is arranged between the gasket ring cover (82) and the connector (86).

13. The refrigerator according to any one of the preceding claims, wherein the refrigerator compartment door (4) has a support member (500) for detachably supporting the water tank (5) and wherein the water tank (5) has a guide member (400) to be supported by the support member.

14. The refrigerator of claim 13, wherein the support member (500) comprises a top surface portion (502) being inclined at a prescribed angle with respect to a horizontal plane, a rear surface portion (506) descending at a prescribed angle from one end of the top surface portion (502), and a front surface portion (504) descending at a prescribed angle from the other end of the top surface portion (502), and wherein the guide member (400) comprises a center portion (402), a rear portion (406) and a front portion (404) corresponding to the top surface portion (502), the rear surface portion (506) and the front surface portion (504) of the support member (500), respectively.

15. The refrigerator of claim 14, wherein the second outlet (57) of the water tank (5) is inclined with respect to a horizontal plane and an angle of inclination of the top surface portion (502) of the support member (500) is smaller than an angle of inclination of the second outlet (57) of the water tank (5).
